# EUROPEAN PATENT SPECIFICATION

(11) **EP 2 731 870 B1**
(45) Date of publication and mention of the grant of the patent: **07.03.2018**
(21) Application number: 12734947.0
(22) Date of filing: 12.07.2012
(51) Int. Cl.: B65G 47/53, B65B 5/08, B65B 35/44, B65B 35/54, B65B 59/00, B65B 65/00, B65G 19/20

(54) **PLANT FOR PACKAGING PRODUCTS IN STRIPS, SUCH AS CHEWING GUM, AND CORRESPONDING PACKAGING METHOD**
ANLAGE ZUM VERPACKEN VON PRODUKTEN IN STREIFEN, Z. B. KAUGUMMI, UND ENTSPRECHENDES VERPACKUNGSVERFAHREN
USINE PERMETTANT D'EMBALLER DES PRODUITS EN BANDES, TELS QUE DES CHEWING-GUMS, ET PROCÉDÉ D'EMBALLAGE CORRESPONDANT

(30) Priority: 14.07.2011 IT MI20111314
(43) Date of publication of application: 21.05.2014
(73) Proprietor: Gima S.p.A., 40069 Zola Predosa (BO) (IT)
(72) Inventor: SASSI, Fabio, I-40133 Bologna (IT)
(74) Representative: Petraz, Gilberto Luigi
(86) International application number: PCT/EP2012/063644
(87) International publication number: WO 2013/007773

(56) References cited:
- WO-A1-00/71445
- WO-A1-97/27108
- WO-A1-03/026989
- DE-C1- 19 944 782
- GB-A- 2 468 855

## Description

### FIELD OF THE INVENTION

The present invention concerns a plant and the corresponding method for packaging products in strips, such as, to give a non-restrictive example, chewing gum, tablets or other.

In particular, the plant according to the present invention comprises one or more wrapping machines in which each of the products in strips is wrapped in suitable protective means, and boxing machines in which a plurality of the products, previously wrapped and organized, are subsequently introduced and packed in a package.

Here and hereafter in the description and the claims, by products in strips we mean products with a substantially parallelepiped shape with a thickness that is at least smaller than the length.

### BACKGROUND OF THE INVENTION

It is known to package, in an organized manner, in a single main package, a plurality of products in strips, such as for example chewing gum or other.

In particular, it is known to dispose the products in strips, already protected by sheets that wrap them, adjacent to each other, so that they can be introduced into a single package which keeps them positioned and associated in an organized manner.

Indeed it is known to provide that, before being packaged in a group of products, the products are each suitably wrapped with suitable protective means, such as for example silver foil, protective films etc., to keep each product separate from the other and individually protected even when the main package is open.

To this purpose a packaging plant is known which comprises a wrapping machine in which each of the products arriving from production stations, is wrapped with the protective means and is normally disposed, in an organized manner and in the envisaged disposition, on a suitable feed line which provides to transfer them to a boxing machine.

The boxing machine picks up on each occasion from the feed line the products previously wrapped and organized, and introduces them into the package provided in a known manner.

The wrapping machine can be disposed in line with the boxing machine so that the feed line moves the products in a rectilinear manner. The boxing machine and the wrapping machine can be the synchronized type, or not.

A plant structured in this way often cannot be reconciled with the requirements of the spaces available.

One disadvantage of plants with a wrapping machine and a boxing machine is that the wrapping machine can form a bottleneck, with a corresponding reduction in the productivity of the plant.

This has led to feed modern boxing machines with two or more wrapping machines, which makes it necessary to dispose at least one of the wrapping machines not in line with the boxing machine.

In this case the problem then arises of making the wrapped and organized products arriving from the wrapping machines available to the boxing machine at the desired cadence.

The transfer operations are carried out manually or with the aid of transfer devices which, since they do not act on the same feed/delivery plane as the machines, have the disadvantage that they modify the orientation and organization of the products during the transfer. Consequently, before being introduced into the boxing machine, the products have to be properly oriented and organized for their subsequent packaging in groups.

Another disadvantage is that, if a stoppage occurs in the wrapping machine, for example due to blockages or for maintenance, then the machine downstream must also be stopped, with consequent losses both in terms of time and in economic terms.

Documents IT-B-1.219.312 and GB-A-2.142.598 describe plants of a known type for packaging products in strips.

Document GB-A-2.468.855 also discloses a plant for packing uniform groups of products, comprising wrapping machines, transfer lines associated to each wrapping machine and an intermediate transfer line.

One purpose of the present invention is to obtain a plant that is compact and which allows to transfer and feed, in the required time and with the required rhythms, to a boxing machine, without modifying the orientation and organization thereof, the wrapped products arriving from one or more wrapping machines of which at least one is disposed staggered with respect to the boxing machine.

Another purpose of the present invention is to allow two or more wrapping machines to feed the boxing machine, whether the machines operate synchronously or asynchronously.

Another purpose of the invention is to be able to feed the boxing machine with a single transfer line, even if the wrapping machines feed their own transfer lines which are separate from that of the boxing machine.

It is also a purpose to obtain transfer lines that transport the products in an organized manner and deliver them in an organized manner to the boxing machine.

It is also a purpose to obtain transfer lines which do not modify the position and orientation of the products with respect to the sliding plane during their movement.

It is also a purpose of the present invention to obtain a transfer line that is simple, easy to adjust and maintain, easily controlled and cleaned, and easy to equip for a change of product.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a plant for packaging uniform groups of products in strips such as chewing gum and other according to the present invention comprises at least two wrapping machines, in which each of the individual products in strips is wrapped in respective protective means, and a boxing machine, disposed downstream, not in line and displaced with respect to the wrapping machine.

Said at least two wrapping machines feed the individual boxing machine by means of at least a transfer unit.

In this way it is possible to feed the boxing machine, synchronously or not, with said wrapping machines.

The transfer unit comprises at least one transfer line associated respectively with each of the wrapping machines. One of the transfer lines is suitable to feed the boxing machine.

The transfer lines are disposed distanced and parallel with respect to each other and are suitable to move, in an organized manner and at the desired cadence, the individual groups of products in strips, keeping the individual components of the groups of products in the reciprocal positions that they will have at the end of the packaging.

Between the transfer lines at least one intermediate transfer line is provided, which is disposed transversely at least between two of the transfer lines.

The intermediate transfer line is suitable to move, continuously and autonomously, the individual groups of products at least between the two transfer lines, keeping the groups of products in strips positioned and oriented as they are in the transfer lines.

The boxing machine will therefore receive, according to the predetermined cadence, the organized products arriving from the first wrapping machine and also from the second wrapping machine.

Different variants of reciprocal positioning of the transfer lines and of the intermediate transfer line or lines are possible according to the number of wrapping machines that feed the boxing machine, and to the layout of the plant.

In a variant, the transfer lines comprise first transfer lines departing from each wrapping machine. Furthermore, in this variant, between at least one of said first transfer lines and the boxing machine there is at least a second transfer line.

According to another variant, at least one of said first transfer lines is connected to the second transfer line by an intermediate transfer line.

Moreover, in another variant, each of the first transfer lines, the second transfer line and also the intermediate transfer line are configured to move the groups of products in strips so that they always lie on the same sliding plane and keep the same reciprocal orientation and positioning as the individual products.

It comes within the scope of the present invention to provide that the wrapping machines are associated with temporary holding means or buffers, in which the products in strips, previously wrapped, are temporarily disposed.

According to the invention, the transfer lines provide a plurality of individual movement sliders suitable to support in an organized manner and in predefined quantities, and also to move a determinate number and type of the products in strips.

According to the invention, in the transfer lines the movement sliders advance step-wise and transport the products resting upon them.

According to the invention, the intermediate transfer line comprises pick-up and delivery sliders which also advance step-wise, in coordination with the movement sliders of the transfer lines.

The pick-up and delivery sliders of the intermediate transfer line pick up and respectively deliver the products, on each occasion from and into the movement sliders, and move them by thrusting them, since the sliders are disposed above the products.

According to a preferential solution, the pick-up and delivery sliders of the intermediate transfer line move in a direction orthogonal to that of the movement sliders of the transfer lines.

According to the invention, the movement sliders and the pick-up and delivery sliders are suitable to move a number of products equal to the number of products in strips which, on each occasion, are delivered to the boxing machine.

The present invention also concerns the corresponding method for transferring products in strips for packaging, as described above.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a schematic representation of a first layout of a plant for packaging products in strips according to the present invention;
- fig. 2 is a schematic representation of a second layout of a plant for packaging products in strips;
- fig. 3 is a schematic representation of a third layout of a plant according to the present invention;
- fig. 4 is a schematic representation of a detail of a plant according to the present invention;
- fig. 5 is a perspective view of a detail of fig. 4;
- fig. 6 is a section view of part of fig. 5;
- fig. 7 is a section view of part of fig. 5.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

With reference to the attached drawings, a plant for packaging products in strips 10, such as for example chewing gum, comprises a first 11 and a second wrapping machine 12 in which each of the products in strips arriving for example from a production machine is wrapped in a known manner in protective means, for example silver foil, protective films or other.

The plant 10 also comprises a boxing machine 13, disposed downstream of the wrapping machines 11, 12, in which the products previously wrapped in the protective means are organized in groups of a determinate number of products, to be suitably packaged with a single packaging sheet or in suitable containing envelopes or boxes.

A transfer unit 15 is provided to transfer the products from the wrapping machines 11, 12 to the boxing machine 13.

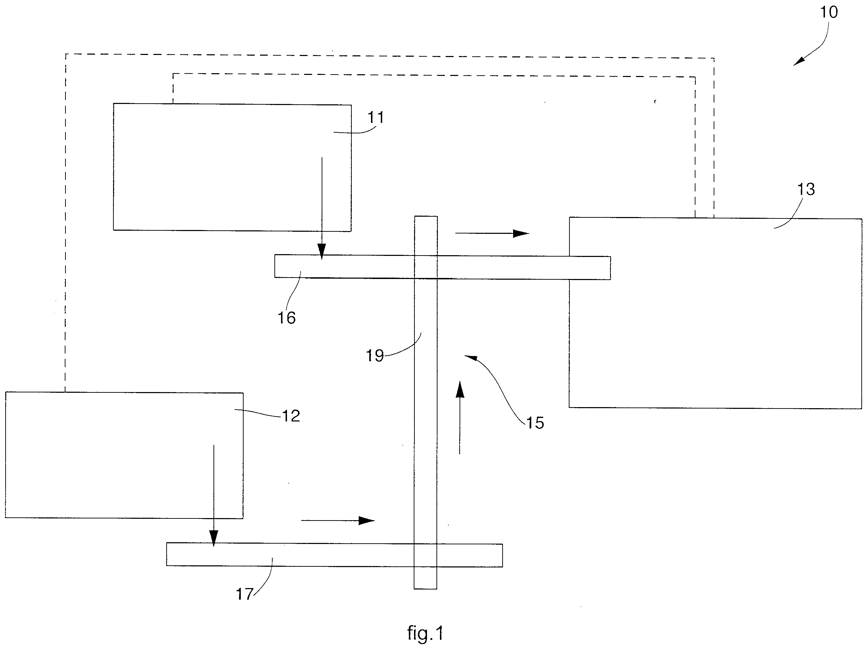

With reference to fig. 1, a first layout of the plant 10 is shown in which the transfer unit 15 comprises a first transfer line 16 and a second transfer line 17 disposed parallel to each other and cooperating respectively with the first wrapping machine 11 and the second wrapping machine 12.

The first transfer line 16 picks up the products from the first wrapping machine 11 and makes them available directly to the boxing machine 13.

The second transfer line 17 picks up the products from the second wrapping machine 12 and delivers them to an intermediate transfer line 19.

The intermediate transfer line 19, disposed transversely to the first 16 and the second transfer line 17, cooperates with the latter to feed the products wrapped by the second wrapping machine 12 toward the boxing machine 13.

In some advantageous forms of embodiment, the first 16, the second transfer line 17 and the intermediate transfer line 19 consist of conveyor belts provided with movement sliders on which the products to be moved are disposed.

The functioning of the wrapping machines 11, 12 in this case is correlated synchronously to the functioning of the boxing machine 13, for example providing that the latter receives first groups of products alternately from the first wrapping machine 11 and second groups of products from the second wrapping machine 12.

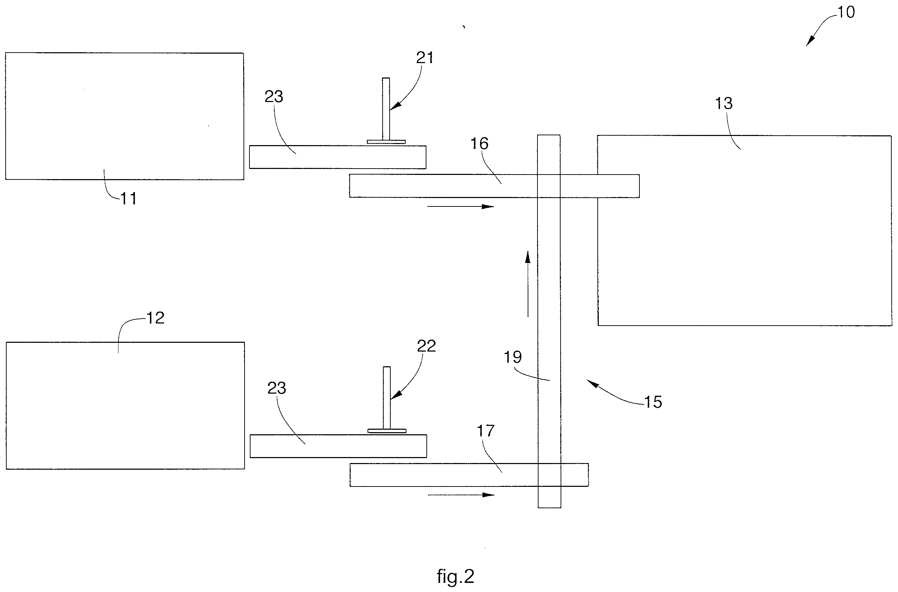

With reference to fig. 2, a second layout of the plant 10 is shown, in which the transfer lines 16, 17 previously described with reference to fig. 1, instead of being served directly by the wrapping machines 11, 12 are each served by feed devices 21, 22.

In particular, the products wrapped by the two wrapping machines 11, 12 are disposed in respective temporary holding stores 23 and, by means of the feed devices 21, 22, are transferred to the transfer lines 16, 17.

The temporary holding stores 23 allow to temporarily house the products that have been wrapped in the protective mean to make them available for the needs of the boxing machine 13.

The feed devices 21, 22 can comprise thruster elements, which from the temporary holding stores 23 translate the products to the respective transfer lines 16, 17.

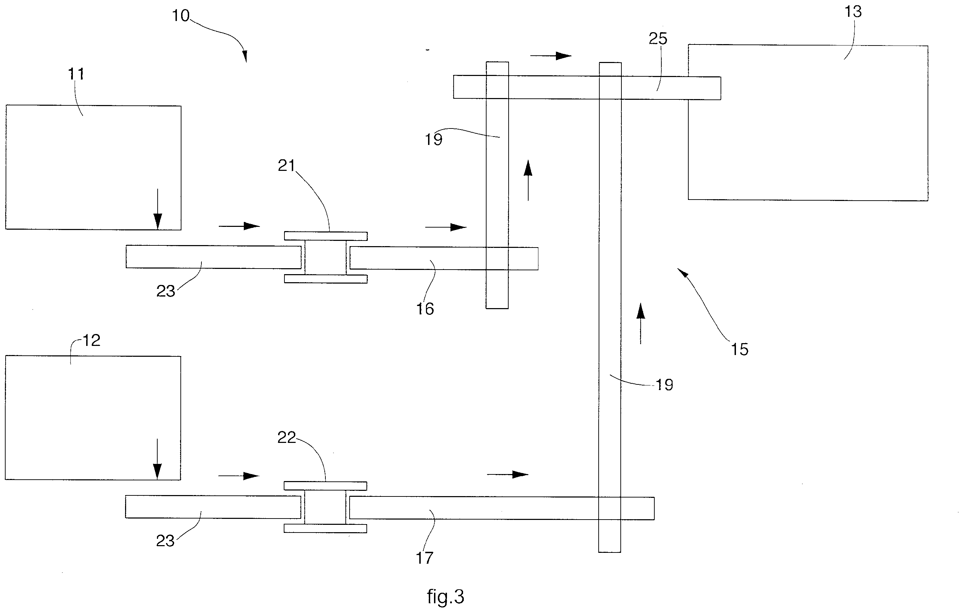

Fig. 3 shows a third layout of the plant 10 according to the invention, in which the products wrapped by the wrapping machines 11, 12 are temporarily disposed in the respective holding stores 23 and the feed devices 21, 22 transfer them to the first 16 and the second transfer line 17.

Each of the transfer lines 16 and 17 is served by a respective intermediate transfer line 19, identical to the one described with reference to figs. 1 and 2.

Each intermediate transfer line 19 makes the products available to a single feeder 25 of the boxing machine 13.

In this form of embodiment the feed devices 21, 22 are the rotary drum type and are suitable to pick up the products from the corresponding holding stores 23 and make them available to the transfer lines 16, 17.

In still other forms of embodiment, again with reference to fig. 3, it can be provided that the holding stores 23 are replaced by movement lines that transfer the products to the feed devices 21, 22 in synchrony with the functioning of the wrapping machines 11, 12. The feed devices 21, 22 in this case also perform the function of temporarily holding the products in strips to make them available for the needs of the transfer lines 16, 17. In this way the feed devices 21, 22 correlate between them the functioning of the upstream and downstream parts.

Both the second and the third layout of the plant 10 described with reference to figs. 2 and 3 allow to disconnect the functioning of the wrapping machines 11, 12 with respect to the functioning of the boxing machine 13, conferring greater versatility on the plant 10, both during normal use and also, for example, in maintenance conditions, allowing only one wrapping machine to function.

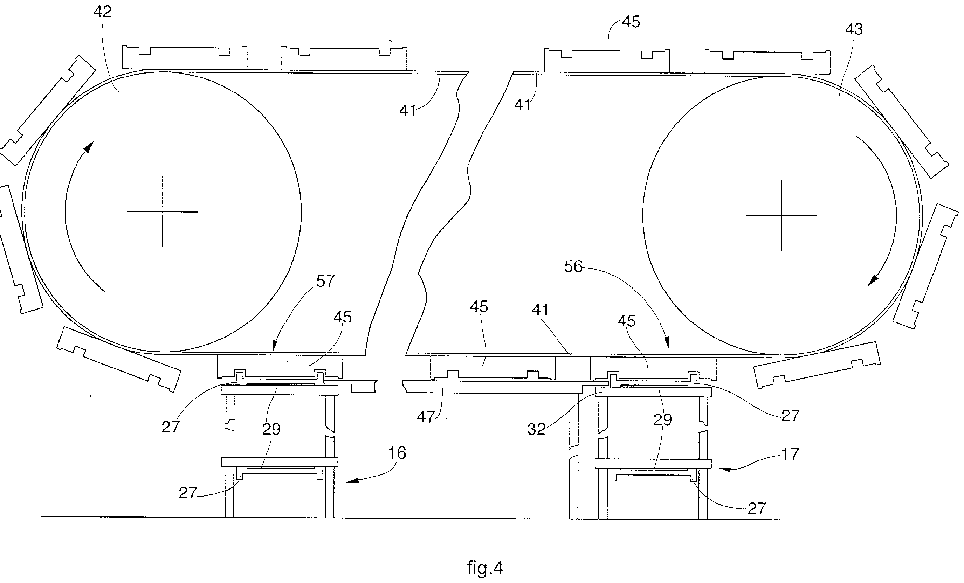

With reference to figs. 4-6, the second transfer line 17 is described, even though an identical description can be provided both for the first transfer line 16 and for the feeder 25 (fig. 3).

The second transfer line 17 comprises a belt 29 which winds between a drive pulley and a return pulley and to which a plurality of movement sliders 27 are associated. During use, a plurality of products in strips, in this case chewing gum G, are positioned in an organized manner on the movement sliders 27. The movement sliders 27 are intended respectively to contain, move and thrust the groups of products in strips on an autonomous continuous surface.

In particular, at least the segment of belt 29 (figs. 4 - 6) that faces toward the upper part is provided with a support plane 32 for the movement sliders 27, which allows a regular translation of the latter without problems of oscillation due to their inertia and to the flexibility of the belt 29.

The movement sliders 27 are associated to the belt 29 in proximity to a cavity 30 in them, by means of substantially known connection means, for example by means of threaded connections.

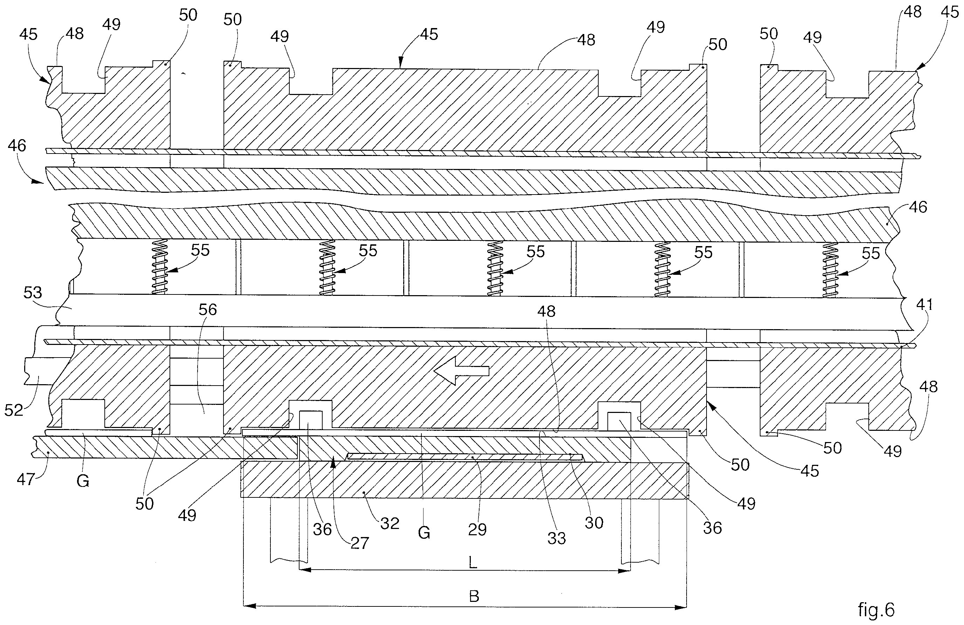

Each movement slider 27 is provided with a support plane 33 with a width L (fig. 6), which is smaller than the length B of the chewing gums G so that, when the chewing gums are disposed on the movement slider 27, the respective ends protrude. In this case, the chewing gums G are moved disposing their length B in a transverse direction with respect to the direction of advance of the movement slider 27. It is quite obvious that, in other forms of embodiment, the chewing gums G can also be disposed according to a different orientation. In this last case it will be necessary to provide suitable containing means able to contain the chewing gums during their movement, and to allow them to be picked up and delivered by other transfer means, as will be described hereafter.

The movement slider 27 is also provided with protruding portions 36 for positioning the groups of products in strips, which extend from the support plane 33 and are disposed at the four corners of the movement slider 27.

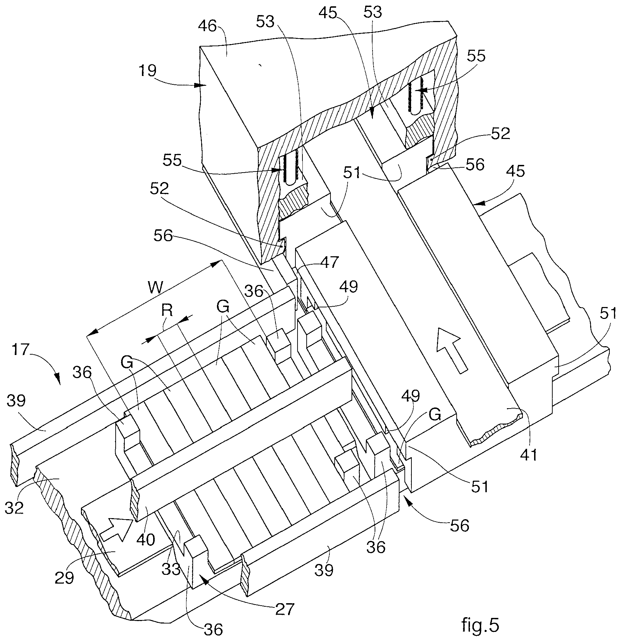

The protruding portions 36 (fig. 5) define a usable length W of the support plane 33 which is a finite multiple of the width R of each chewing gum G. In this way a determinate number of chewing gums G can be disposed and contained on the support plane 33, in this case seven. It is advantageous to provide that the number of chewing gums G is equal to the number of chewing gums that are subsequently grouped together and packaged in a single package in the boxing machine 13.

At the opposite sides of the support plane 32 two lateral containing walls 39 are associated, which are suitable to contain the chewing gums G on the movement sliders 27, preventing any transverse displacement thereof during movement.

According to an advantageous form of embodiment, a presser device 40 is associated with the upper part of the first transfer mean 16, substantially along its entire longitudinal extension, with the function of keeping the chewing gums G adherent to the support plane 33 of the movement sliders 27.

The intermediate transfer line 19, which in figs. 1 and 2 extends transversely between the first 16 and the second transfer line 17, comprises a belt 41 (figs. 4 - 7) which winds between a drive pulley 42 and a return pulley 43, and to which a plurality of pick-up/delivery sliders 45 are associated.

The drive pulley 42 and the return pulley 43 are associated to a bearing structure 46 (fig. 5).

At least the pick-up/delivery sliders 45 that are associated with the lower segment of the belt 41 are suitable to slide on a sliding plane 47 which, with reference to fig. 4, extends from the first 16 to the second transfer line 17. It is advantageous to provide that the sliding plane 47 is connected, or at least put in continuity, with the support plane 33 of the movement slider 27, so that the chewing gums G can move upon it without problems of jamming.

Each pick-up/delivery slider 45 (fig. 6) is provided with a substantially continuous surface 48 on which two through grooves 49 are made.

The through grooves 49 are disposed in positions suitable to allow the protruding portions 36 of the movement sliders 27 to pass through them. More specifically, when the chewing gums G are picked up by one of the movement sliders 27, the pick-up/delivery slider 45 is positioned above the latter so that the surface 48 is facing the chewing gums G. In this condition (fig. 5), the protruding portions 36 of the movement slider 27 are disposed outside the transverse bulk of the pick-up/delivery slider 45 so that they do not create any interference with the movement of the movement slider 27.

The surface 48 of the pick-up/delivery slider 45 is also provided with two opposite protruding edges 50 which extend transversely to its normal direction of advance and have the function of thrusting the chewing gums G along the sliding plane 47.

The pick-up/delivery slider 45 also comprises two opposite first guide elements 51 which extend along its longitudinal sides, and which are suitable to cooperate with the bearing structure 46.

The bearing structure 46 comprises second guide elements 52 on which, during use, the first guide elements 51 of the pick-up/delivery sliders 45 rest, and a pressure plate 53 which, by means of spring means 55, is pressed against the pick-up/delivery slider 45.

The pressure plate 53 therefore allows to keep the pick-up/delivery slider 45 adherent to the second guide elements 52 and in a parallel condition with the sliding plane 47, reducing problems of jamming of the intermediate transfer line 19.

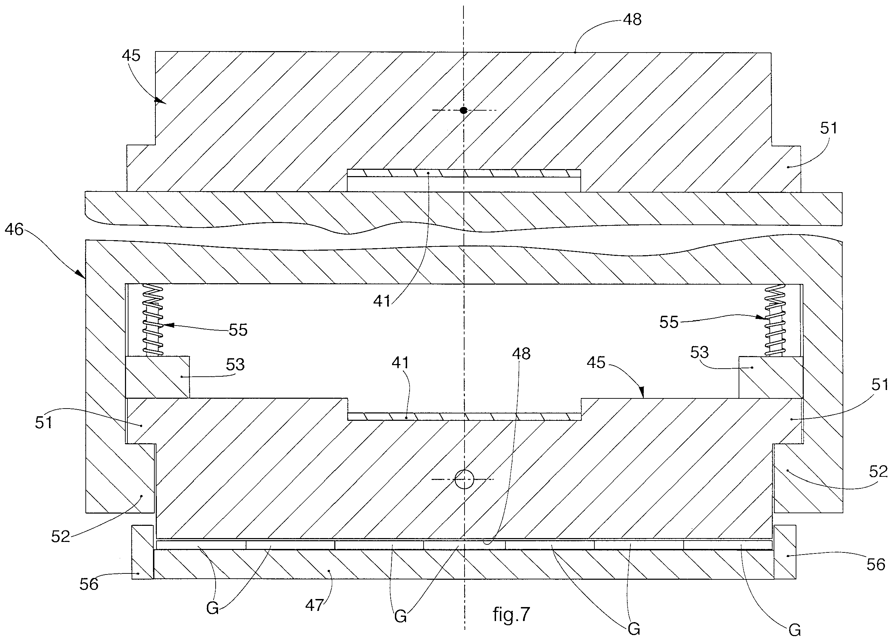

The intermediate transfer line 19 (fig. 7) also comprises lateral containing walls 56 suitable to contain the chewing gums G as they are moved along the sliding plane 47.

It is advantageous to provide that hinge means are also associated with the intermediate transfer line 19, which allow to lift, by rotation around a longitudinal pin, the bearing structure 46 with respect to the sliding plane 47. In fact, in the event of any jamming, this allows to maintain or clean the machine, so that normal functioning conditions can be restored.

The pick-up/delivery slider 45 delivers the chewing gums G to the first transfer line 16 and loads them onto a movement slider in exactly the same way as described for the second transfer line 17. The chewing gums G are therefore repositioned in an organized manner on the movement slider of the first transfer line 16 to subsequently feed them to the boxing machine 13.

The plant according to the present invention functions as follows.

The chewing gums G wrapped by the protective sheets in the wrapping machines 11, 12 are made available, either directly (fig. 1) or by the feed devices 21, 22 to the transfer lines 16, 17.

The chewing gums G are loaded, organized in groups, onto the movement sliders 27 of the transfer lines 16, 17. Therefore, each movement slider 27 supports a determinate number of chewing gums G which advantageously coincides with the number of chewing gums G that will subsequently be packaged in a single package.

The chewing gums G loaded on the second transfer line 17 are taken near to a pick-up zone 56 (fig. 4) of the intermediate transfer line 19.

When the movement slider 27 moves to the pick-up zone 56, the pick-up/delivery slider 45 is already positioned above it. Subsequently the pick-up/delivery slider 45 is moved toward the first transfer line 16, moving the chewing gums G from the movement slider 27 along the sliding plane 47. A successive pick-up/delivery slider 45 is disposed on this last movement slider 27.

A discrete movement of the sliders of the second transfer line 17 disposes a successive movement slider 27 in correspondence with the pick-up/delivery slider 45 to pick up and transfer other chewing gums G.

Therefore, with a discrete and alternate movement of the sliders of the second transfer line 17 and those of the intermediate transfer line 19, it is possible to transfer the chewing gums G in groups toward the first transfer line 16, and in correspondence with a discharge zone 57.

In correspondence with the discharge zone 57 the chewing gums G are translated from the sliding plane 47 to the movement slider 27 of the first transfer line 16.

The first transfer line 16 in turn transfers the chewing gums G to the boxing machine 13 in which they are packaged.

Given that the first transfer line 16 is suitable to feed both the chewing gums G of the first wrapping machine 11 and also those of the second wrapping machine 12, the chewing gums G will be loaded in proximity to the first wrapping machine 11 onto the movement sliders 27 of the first transfer line 16 in a staggered manner, so as to leave one movement slider 27 free for loading the chewing gums arriving from the intermediate transfer line 19.

This therefore means that the first transfer line 16 is made to function with double productivity compared with the second transfer line 17.

It is clear that modifications and/or additions of parts may be made to the plant for packaging products in strips and the corresponding method as described heretofore, without departing from the field and scope of the present invention.

For example, in some forms of embodiment it is possible to provide that, with reference to fig. 2, the second transfer line 17 is provided with movement sliders 27 suitable to move in a group a first number of chewing gums G. In the same way, the pick-up/delivery sliders 45 of the intermediate transfer line 19 are also suitable to move the same first number of chewing gums G, toward the first transfer line 16. The first transfer line 16 is in turn provided with first movement sliders and second movement sliders in which the first movement sliders are suitable to move a second number of chewing gums G from the first wrapping machine 11, while the second movement sliders are suitable to receive the chewing gums G of the first intermediate transfer line 19. Consequently, the first transfer line 16 will deliver on each occasion to the boxing machine 13 the first number and the second number of products.

The same considerations can be made with reference to fig. 3, where it is provided that the two intermediate transfer lines 19 respectively move the first number and the second number of chewing gums G toward the feeder 25 which in this case performs the same function as the first transfer line 16, described with reference to figs. 1 and 2.

In the same way, in other forms of embodiment, if only one wrapping machine 12 is provided, disposed staggered with respect to the boxing machine 13, it is possible to provide a similar disposition of the layout as described with reference to fig. 3 in which the first wrapping machine 11 and the transfer lines connected to it are not present.

In this case it is possible to provide that the feed devices 22 pick up from the stores 23, alternately, a first number and a second number of chewing gums G to make them available respectively on first and second movement sliders 27 of the second transfer line 17. Subsequently, corresponding pick-up/delivery sliders of the intermediate transfer line 19 and other movement sliders of the feeder 25 will supply the first and the second number of chewing gums G in an organized manner to the boxing machine 13.

It is also clear that, although the present invention has been described with reference to some specific examples, a person of skill in the art shall certainly be able to achieve many other equivalent forms of plant for packaging products in strip such as chewing gum and the corresponding method, having the characteristics as set forth in the claims and hence all coming within the field of protective defined thereby.

For example, according to some variants it is possible to provide that all the machines of the plant 10 of the present invention, in particular the wrapping machines 11, 12 and the boxing machine 13, operate in synchrony with each other.

In another variant, it is possible to provide that all the machines of the plant 10 of the present invention, in particular the wrapping machines 11, 12 and the boxing machine 13, operate asynchronously with each other.

Furthermore, another variant of the present invention provides that the wrapping machines 11, 12 operate in synchrony with each other, while the boxing machine 13 operates asynchronously.

Moreover, another variant of the present invention provides that one of the wrapping machines 11, 12 operates in synchrony with the boxing machine 13, while the other wrapping machine 11, 12 operates asynchronously.

Depending on one variant or the other as described above, it is provided that the transfer lines 16, 17, 25 and the intermediate transfer lines 19 are consequently conditioned or conditionable to the synchronous or asynchronous functioning of the machines of the plant 10.

## Claims

1. Plant for packaging uniform groups of products in strips (G), comprising at least two wrapping machines (11, 12) in which each of said products in strips (G) is wrapped in respective protective means, and a boxing machine (13) disposed downstream of said wrapping machines (11, 12) in which the numerically defined groups of said products in strips (G) wrapped in protective means are packed in individual packages, at least one wrapping machine (11, 12) being not in line with the boxing machine (13), and a transfer unit (15) suitable to transfer the groups of products in strips (G) wrapped by said two wrapping machines (11, 12) toward the boxing machine (13), said transfer unit (15) comprises at least one transfer line (16, 17; 25) associated to each wrapping machine (11, 12), one of said transfer lines (16, 17; 25) being suitable to feed the boxing machine (13), charaterized in that said transfer lines (16, 17; 25) are distanced and parallel and suitable to move, in an organized manner and with the desired cadence, the individual groups of products in strips (G) keeping the individual components of the groups of products in the reciprocal positions that they will have at the end of packaging, and at least one intermediate transfer line (19) disposed at least between two of the transfer lines (16, 17; 25), which is suitable to move said individual groups of products (G) continuously and autonomously at least between said two transfer lines (16, 17; 25), keeping said groups of products in strips (G) positioned and oriented as they are present in said transfer lines (16, 17; 25), wherein each of said transfer lines (16, 17; 25) comprises a plurality of individual movement sliders (27) and said intermediate transfer line (19) also comprises a plurality of pick-up/delivery sliders (45), mating with said movement sliders (27), said movement sliders (27) and said pick-up/delivery sliders (45) being suitable to contain and move at least one group of products in strips (G), wherein said movement sliders (27) and said pick-up/delivery sliders (45) are each configured to move the same group of products in strips (G), said group of products in strips (G) corresponding to the group of products (G) that is packaged in a single package by said boxing machine (13),
wherein said movement sliders (27) have protruding portions (36) for positioning groups of products in strips (G) and being respectively intended to contain, move and thrust said groups of products in strips (G) on an autonomous continuous surface;
wherein a sliding plane (47) is provided between said transfer lines (16, 17, 25), wherein each pick-up/delivery slider (45) is provided with a continuous surface (48) on which two through grooves (49) are made in positions suitable to allow the protruding portions (36) of the movement sliders (27) to pass through them, wherein said surface (48) is provided with at least one rear protruding edges (50) which extends transversely to the direction of advance of the pick-up/delivery slider (45) and is configured for thrusting the products in strips (G) along the sliding plane (47), the single group of products in strips (G) present on said pick-up/delivery slider (45) resting at least on said rear protruding edge (50) in order to be moved.

2. Plant as in claim 1, **characterized in that** each of said transfer lines (16, 17; 25) comprises a belt (29) wound between a drive pulley and a return pulley and to which said movement sliders (27) are associated, wherein at least one segment of the belt (29) facing toward an upper part is provided with a support plane (32) for the movement sliders (27), two lateral containing walls (39) being provided at opposite sides of the support plane (32), configured to contain the products in strips (G) on the respective movement sliders (27).

3. Plant as in any claim hereinbefore, **characterized in that** said transfer lines comprise first transfer lines (16, 17) starting from each wrapping machine (11, 12), at least one second transfer line (25, 16) being present between at least one of said first transfer lines (16, 17) and the boxing machine (13).

4. Plant as in claim 3, **characterized in that** at least one of said first transfer lines (16, 17) is connected to the second transfer line (25, 16) by an intermediate transfer line (19).

5. Plant as in any claim hereinbefore, **characterized in that** said movement sliders (27) are provided with a support plane (33) on which the individual groups of products in strips (G) are disposed, said sliding plane (47) being connected in continuity to said support plane (33).

6. Plant as in claim 5, **characterized in that** the support plane (33) is provided with a width (L) which is smaller than a length (B) of the products in strips (G) so that, when the products in strips (G) are disposed on the movement slider (27), the respective ends protrude.

7. Plant as in claim 5 or 6, **characterized in that the** protruding portions (36) extend from the support plane (33) and are disposed at the four corners of the respective movement slider (27) and configured to define a usable length (W) of the support plane (33) which is a finite multiple of a width (R) of each product in strips (G).

8. Plant as in any of claims from 5 to 7, **characterized in that** said intermediate transfer line (19) comprises a belt (41) wound between a drive pulley (42) and a return pulley (43) associated to a bearing structure (46), and to which said pick-up/delivery sliders (45) are associated, wherein the pick-up/delivery sliders (45) associated with a lower segment of the belt (41) are suitable to slide on the sliding plane (47) extending between the said transfer lines (16, 17; 25).

9. Plant as in any claim hereinbefore, **characterized in that** said intermediate transfer line (19) comprises guide means (51, 52) configured to keep said pick-up/delivery sliders (45) substantially parallel to said sliding plane (47), said guide means (51, 52) comprising two opposite first guide elements (51) extending along longitudinal sides of a respective pick-up/delivery slider (45), and which are suitable to cooperate with the bearing structure (46), **said** guide means (51, 52) further comprising second guide elements (52) on which the first guide elements (51) are able to rest.

10. Plant as in any claim hereinbefore, **characterized in that** said intermediate transfer line (19) comprises a pressure plate (53) which, by means of spring means (55), is pressed against a respective pick-up/delivery slider (45).

11. Plant as in claim 1, **characterized in that** said intermediate transfer line (19) comprises lateral containing walls (56) suitable to contain the products in strips (G) as they are moved along the sliding plane (47).

12. Plant as in claim 1, **characterized in that** each of said first transfer lines (16, 17), said second transfer line (25, 16), and also said intermediate transfer line (19), are configured to move said groups of products in strips (G) so that they always lie on the same sliding plane (33, 47) and keep the same reciprocal orientation and positioning of the individual products (G).

13. Plant as in any claims hereinbefore, **characterized in that** at least said second transfer line (25) comprises first and second movement sliders (27) suitable to respectively move a first and a second group of said products in strips (G) and to feed said boxing machine (13).

14. Plant as in claim 1, **characterized in that** a presser device (40) is associated with said movement sliders (27), suitable to keep the groups of products in strips (G) adherent to said support plane (33).

15. Plant as in any claim hereinbefore, **characterized in that a** temporary holding store (23) is provided between at least one wrapping machine (11, 12) and at least one transfer line (16, 17), to temporarily contain the individual wrapped groups of products in strips (G), **and in that** feed devices (21, 22) are provided to transfer said individual products in strips (G) from said temporary holding store (23) to said transfer line (16, 17).

16. Method for packaging defined groups of products in strips (G), using a plant as in any claims hereinbefore, comprising a step in which each of the components of said groups of products in strips (G) is wrapped in respective protective means in at least two wrapping machines (11, 12), a step of transferring said groups of products in strips (G) from said at least one wrapping machine (11, 12) toward a single boxing machine (13), and a step in which a numerically defined group of said products in strips (G) wrapped to constitute a group are packed in a single package by the boxing machine (13), during said transfer step at least one transfer line (16, 17; 25) associated to each wrapping machine (11, 12) moves the individual groups of products in strips (G) emerging from the corresponding wrapping machine (11, 12), one of said transfer lines (16, 17; 25) being used to feed the boxing machine (13), **characterized in that** said transfer lines (16, 17; 25) are distanced and parallel so as to move, in an organized manner and with the desired cadence, the individual groups of products in strips (G), keeping the individual components of the groups of products in the reciprocal positions that they will have at the end of packaging, and at least one intermediate transfer line (19), disposed at least between two of the transfer lines (16, 17; 25), moves the individual groups of products in strips (G) continuously and autonomously at least between said two transfer lines (16, 17; 25), keeping the groups of products in strips (G) always oriented and with the components reciprocally positioned as they are supplied by the corresponding transfer line (16, 17),
wherein a plurality of individual movement sliders (27) comprised in each of said transfer lines (16, 17; 25) and a plurality of pick-up/delivery sliders (45) comprised in said intermediate transfer line (19), and mating with said movement sliders (27), contain and move at least one group of products in strips (G), wherein said movement sliders (27) and said pick-up/delivery sliders (45) each move the same group of products in strips (G), said group of products in strips (G) corresponding to the group of products (G) that is packaged in a single package by said boxing machine (13),
wherein said movement sliders (27) have protruding portions (36) for positioning groups of products in strips (G) and being respectively intended to contain, move and thrust said groups of products in strips (G) on an autonomous continuous surface;
wherein a sliding plane (47) is provided between said transfer lines (16, 17, 25), wherein each pick-up/delivery slider (45) is provided with a continuous surface (48) on which two through grooves (49) are made in positions suitable to allow the protruding portions (36) of the movement sliders (27) to pass through them, wherein said surface (48) is provided with at least one rear protruding edges (50) which extends transversely to the direction of advance of the pick-up/delivery slider (45), thrusting the products in strips (G) along the sliding plane (47), the single group of products in strips (G) present on said pick-up/delivery slider (45) resting at least on said rear protruding edge (50) in order to be moved.

17. Method as in claim 16, **characterized in that** during said transfer step said individual groups of products in strips (G) are moved lying substantially always on the same sliding plane (33, 47), being positioned on specific said movement sliders (27) in the first (16, 17) and in a possible second (25; 16) transfer line, and sliding on a fixed, flat surface located between the first (16, 17) and the possible second (25; 16) transfer line, positioned and thrust by specific said pick-up/delivery sliders (45).

## Patentansprüche

1. Anlage zum Verpacken von gleichförmigen Gruppen von Produkten in Streifen (G), umfassend mindestens zwei Einwickelmaschinen (11, 12), in denen jedes der Produkte in Streifen (G) in jeweilige Schutzmittel eingewickelt wird, und eine Einschachtelmaschine (13), die stromabwärts von den Einwickelmaschinen (11, 12) angeordnet ist, in der die zahlenmäßig definierten Gruppen der Produkte in Streifen (G), die in Schutzmittel eingewickelt sind, in einzelne Pakete verpackt werden, wobei mindestens eine Einwickelmaschine (11, 12) mit der Einschachtelmaschine (13) nicht in Reihe ist, und eine Übertragungseinheit (15), die geeignet ist, um die Gruppen von Produkten in Streifen (G), die durch die zwei Einwickelmaschinen (11, 12) eingewickelt sind, hin zu der Einschachtelmaschine (13) zu übertragen, wobei die Übertragungseinheit (15) mindestens eine Übertragungsstrecke (16, 17; 25) umfasst, die jeder Einwickelmaschine (11, 12) zugeordnet ist, wobei eine der Übertragungstrecken (16, 17; 25) für eine Beschickung der Einschachtelmaschine (13) geeignet ist,
**dadurch gekennzeichnet, dass** die Übertragungsstrecken (16, 17; 25) beabstandet und parallel sind und geeignet sind, um in einer organisierten Weise und mit der gewünschten Kadenz die einzelnen Gruppen von Produkten in Streifen (G) zu bewegen, wobei die einzelnen Komponenten der Gruppen von Produkten in gegenseitigen Positionen gehalten werden, die sie am Ende des Verpackens haben werden, und mindestens eine Zwischenübertragungsstrecke (19), die mindestens zwischen zwei der Übertragungsstrecken (16, 17; 25) angeordnet ist, die geeignet ist, um die einzelnen Gruppen von Produkten (G) kontinuierlich und autonom mindestens zwischen den zwei Übertragungstrecken (16, 17; 25) zu bewegen, wobei die Gruppen von Produkten in Streifen (G) positioniert und ausgerichtet gehalten werden, wenn sie in den Übertragungsstrecken (16, 17; 25) vorliegen, wobei jede der Übertragungsstrecken (16, 17; 25) eine Vielzahl von einzelnen Bewegungsschiebern (27) umfasst und die Zwischenübertragungsstrecke (19) auch eine Vielzahl von Aufnahme-/Lieferschieber (45) umfasst, die mit den Bewegungsschiebern (27) zusammenpassen, wobei die Bewegungsschieber (27) und die Aufnahme-/Lieferschieber (45) geeignet sind, um mindestens eine Gruppe von Produkten in Streifen (G) zu beinhalten und zu bewegen,
wobei die Bewegungsschieber (27) und die Aufnahme-/Lieferschieber (45) jeweils konfiguriert sind, um dieselbe Gruppe von Produkten in Streifen (G) zu bewegen, wobei die Gruppe von Produkten in Streifen (G) der Gruppe von Produkten (G) entspricht, die in einem einzigen Paket durch die Einschachtelmaschine (13) verpackt ist,
wobei die Bewegungsschieber (27) vorstehende Abschnitte (36) zum Positionieren von Gruppen von Produkten in Streifen (G) haben und jeweils vorgesehen sind, um die Gruppen von Produkten in Streifen (G) auf einer autonomen kontinuierlichen Fläche zu beinhalten, zu bewegen und vorzuschieben;
wobei eine Gleitebene (47) zwischen den Übertragungsstrecken (16, 17, 25) bereitgestellt ist,
wobei jeder Aufnahme-/Lieferschieber (45) mit einer kontinuierlichen Fläche (48) bereitgestellt ist, auf der zwei Durchgangsnuten (49) in Positionen hergestellt sind, die geeignet sind, um den vorstehenden Abschnitten (36) der Bewegungsschieber (27) zu erlauben, durch sie zu verlaufen, wobei die Fläche (48) mit mindestens einer hinteren vorstehenden Kante (50) bereitgestellt ist, die sich quer zu der Vorrückrichtung des Aufnahme-/Lieferschiebers (45) erstreckt und zum Vorschieben der Produkte in Streifen (G) entlang der Gleitebene (47) konfiguriert ist, wobei die einzige Gruppe von Produkten in Streifen (G), die auf dem Aufnahme-/Lieferschieber (45) vorliegt, mindestens auf der hinteren vorstehenden Kante (50) ruht, um bewegt zu werden.

2. Anlage nach Anspruch 1, **dadurch gekennzeichnet, dass** jede der Übertragungsstrecken (16, 17; 25) einen Riemen (29) umfasst, der zwischen einer Antriebsscheibe und einer Umlenkscheibe gewunden ist und dem die Bewegungsschieber (27) zugeordnet sind, wobei mindestens ein Segment des Riemens (29), das hin zu einem oberen Teil gewandt ist, mit einer Trägerebene (32) für die Bewegungsschieber (27) bereitgestellt ist, wobei zwei seitliche Behälterwände (39) an gegenüberliegenden Seiten der Trägerebene (32) bereitgestellt sind, die konfiguriert sind, um die Produkte in Streifen (G) auf den jeweiligen Bewegungsschiebern (27) zu beinhalten.

3. Anlage nach einem vorhergehenden Anspruch, **dadurch gekennzeichnet, dass** die Übertragungsstrecken erste Übertragungsstrecken (16, 17), die bei jeder Einwickelmaschine (11, 12) beginnen, mindestens eine zweite Übertragungsstrecke (25, 16), die zwischen mindestens einer der ersten Übertragungsstrecken (16, 17) und der Einschachtelmaschine (13) vorliegt, umfassen.

4. Anlage nach Anspruch 3, **dadurch gekennzeichnet, dass** mindestens eine der ersten Übertragungsstrecken (16, 17) mit der zweiten Übertragungsstrecke (25, 16) durch eine Zwischenübertragungsstrecke (19) verbunden ist.

5. Anlage nach einem vorhergehenden Anspruch, **dadurch gekennzeichnet, dass** die Bewegungsschieber (27) mit einer Trägerebene (33) bereitgestellt sind, auf der die einzelnen Gruppen von Produkten in Streifen (G) angeordnet sind, wobei die Gleitebene (47) in Kontinuität mit der Trägerebene (33) verbunden ist.

6. Anlage nach Anspruch 5, **dadurch gekennzeichnet, dass** die Trägerebene (33) mit einer Breite (L) bereitgestellt ist, die derart kleiner ist als eine Länge (B) der Produkte in Streifen (G), dass, wenn die Produkte in Streifen (G) auf dem Bewegungsschieber (27) angeordnet sind, die jeweiligen Enden vorstehen.

7. Anlage nach Anspruch 5 oder 6, **dadurch gekennzeichnet, dass** sich die vorstehenden Abschnitte (36) von der Trägerebene (33) erstrecken und an den vier Ecken des jeweiligen Bewegungsschiebers (27) angeordnet sind und konfiguriert sind, um eine nutzbare Länge (W) der Trägerebene (33) zu definieren, die ein endliches Mehrfaches einer Breite (R) jedes Produkts in Streifen (G) ist.

8. Anlage nach einem der Ansprüche 5 bis 7, **dadurch gekennzeichnet, dass** die Zwischenübertragungsstrecke (19) einen Riemen (41) umfasst, der zwischen einer Antriebsscheibe (42) und einer Umlenkscheibe (43) gewunden ist, der einer Lagerstruktur (46) zugeordnet ist und dem die Aufnahme-/Lieferschieber (45) zugeordnet sind, wobei die Aufnahme-/Lieferschieber (45), die mit einem unteren Segment des Riemens (41) zugeordnet sind, geeignet sind, um auf der Gleitebene (47) zu gleiten, die sich zwischen den Übertragungsstrecken (16, 17; 25) erstreckt.

9. Anlage nach einem vorhergehenden Anspruch, **dadurch gekennzeichnet, dass** die Zwischenübertragungsstrecke (19) Führungsmittel (51, 52) umfasst, die konfiguriert sind, um die Aufnahme-/Lieferschieber (45) im Wesentlichen parallel zu der Gleitebene (47) zu halten, wobei die Führungsmittel (51, 52) zwei gegenüberliegende erste Führungselemente (51) umfassen, die sich entlang Längsseiten eines jeweiligen Aufnahme-/Lieferschiebers (45) erstrecken, und die geeignet sind, um mit der Lagerstruktur (46) zusammenzuwirken, wobei die Führungsmittel (51, 52) ferner zweite Führungsmittel (52) umfassen, auf denen die ersten Führungselemente (51) imstande sind zu ruhen.

10. Anlage nach einem vorhergehenden Anspruch, **dadurch gekennzeichnet, dass** die Zwischenübertragungsstrecke (19) eine Druckplatte (53) umfasst, die mittels Federmittel (55) gegen einen jeweiligen Aufnahme-/Lieferschieber (45) gedrückt wird.

11. Anlage nach Anspruch 1, **dadurch gekennzeichnet, dass** die Zwischenübertragungsstrecke (19) seitliche Behälterwände (56) umfasst, die geeignet sind, um die Produkte in Streifen (G) zu beinhalten, wenn sie entlang der Gleitebene (47) bewegt werden.

12. Anlage nach Anspruch 1, **dadurch gekennzeichnet, dass** jede der ersten Übertragungsstrecken (16, 17), der zweiten Übertragungsstrecke (25, 16) und auch der Zwischenübertragungsstrecke (19) konfiguriert ist, um die Gruppen von Produkten in Streifen (G) derart zu bewegen, dass sie immer auf der gleichen Gleitebene (33, 47) liegen und die gleiche gegenseitige Ausrichtung und Positionierung der einzelnen Produkte (G) halten.

13. Anlage nach einem vorhergehenden Anspruch, **dadurch gekennzeichnet, dass** mindestens die zweite Übertragungsstrecke (25) erste und zweite Bewegungsschieber (27) umfasst, die geeignet sind, um jeweils eine erste und eine zweite Gruppe der Produkte in Streifen (G) zu bewegen und um der Einschachtelmaschine (13) zuzuführen.

14. Anlage nach Anspruch 1, **dadurch gekennzeichnet, dass** eine Pressvorrichtung (40) mit den Bewegungsschiebern (27) zugeordnet ist, die geeignet ist, um die Gruppen von Produkten in Streifen (G) haftend an der Trägerebene (33) zu halten.

15. Anlage nach einem vorhergehenden Anspruch, **dadurch gekennzeichnet, dass** ein temporärer Haltespeicher (23) zwischen mindestens einer Einwickelmaschine (11, 12) und mindestens einer Übertragungsstrecke (16, 17) bereitgestellt ist, um die einzelnen eingewickelten Gruppen von Produkten in Streifen (G) temporär zu beinhalten, und dass Zuführvorrichtungen (21, 22) bereitgestellt sind, um die einzelnen Produkte in Streifen (G) von dem temporären Haltespeicher (23) zu der Übertragungsstrecke (16, 17) zu übertragen.

16. Verfahren zum Verpacken von definierten Gruppen von Produkten in Streifen (G) unter Verwendung einer Anlage nach einem der vorhergehenden Ansprüche, umfassend einen Schritt, bei dem jede der Komponenten der Gruppen von Produkten in Streifen (G) in jeweilige Schutzmitteln in mindestens zwei Einwickelmaschinen (11, 12) eingewickelt wird, einen Schritt des Übertragens der Gruppen von Produkten in Streifen (G) von der mindestens einen Einwickelmaschine (11, 12) hin zu einer einzigen Einschachtelmaschine (13) und einen Schritt, bei dem eine zahlenmäßig definierte Gruppe der Produkte in Streifen (G), die eingewickelt sind, um eine Gruppe zu bilden, in ein einziges Paket durch die Einschachtelmaschine (13) verpackt wird, wobei während des Übertragungsschritts mindestens eine Übertragungsstrecke (16, 17; 25), die jeder Einwickelmaschine (11, 12) zugeordnet ist, die einzelnen Gruppen von Produkten in Streifen (G) bewegt, die aus der entsprechenden Einschachtelmaschine (11, 12) austreten, wobei eine der Übertragungsstrecken (16, 17; 25) verwendet wird, um der Einschachtelmaschine (13) zuzuführen, **dadurch gekennzeichnet, dass**
die Übertragungsstrecken (16, 17; 25) beabstandet und parallel sind, um die einzelnen Gruppen von Produkten in Streifen (G) in einer organisierten Weise und mit der gewünschten Kadenz zu bewegen, wobei die einzelnen Komponenten der Gruppen von Produkten in den gegenseitigen Positionen gehalten werden, die sie am Ende des Verpackens haben werden, und mindestens eine Zwischenübertragungsstrecke (19), die mindestens zwischen zwei der Übertragungsstrecken (16, 17; 25) angeordnet ist, die einzelnen Gruppen von Produkten in Streifen (G) kontinuierlich und autonom mindestens zwischen den zwei Übertragungsstrecken (16, 17; 25) bewegt, wobei die Gruppen von Produkten in Streifen (G) immer ausgerichtet und mit den Komponenten gegenseitig positioniert gehalten werden, wenn sie durch die entsprechende Übertragungsstrecke (16, 17) zugeführt werden,
wobei mehrere einzelne Bewegungsschieber (27), die in jeder der Übertragungsstrecken (16, 17; 25) vorgesehen sind, und mehrere Aufnahme-/Lieferschieber (45), die in der Zwischenübertragungsstrecke (19) vorgesehen sind und mit den Bewegungsschiebern (27) zusammenpassen, mindestens eine Gruppe von Produkten in Streifen (G) beinhalten und bewegen,
wobei die Bewegungsschieber (27) und die Aufnahme-/Lieferschieber (45) jeweils dieselbe Gruppe von Produkten in Streifen (G) bewegen, wobei die Gruppe von Produkten in Streifen (G) der Gruppe von Produkten (G) entspricht, die in einem einzigen Paket durch die Einschachtelmaschine (13) verpackt ist,
wobei die Bewegungsschieber (27) vorstehende Abschnitte (36) zum Positionieren von Gruppen von Produkten in Streifen (G) haben und jeweils vorgesehen sind, um die Gruppen von Produkten in Streifen (G) auf einer autonomen kontinuierlichen Fläche zu beinhalten, zu bewegen und vorzuschieben;
wobei eine Gleitebene (47) zwischen den Übertragungsstrecken (16, 17, 25) bereitgestellt ist,
wobei jeder Aufnahme-/Lieferschieber (45) mit einer kontinuierlichen Fläche (48) bereitgestellt ist, auf der zwei Durchgangsnuten (49) in Positionen hergestellt sind, die geeignet sind, um den vorstehenden Abschnitten (36) der Bewegungsschieber (27) zu erlauben, durch sie zu verlaufen,
wobei die Fläche (48) mit mindestens einer hinteren vorstehenden Kanten (50) bereitgestellt ist, die sich quer zu der Vorrückrichtung des Aufnahme-/Lieferschiebers (45) erstreckt, wobei die Produkte in Streifen (G) entlang der Gleitebene (47) vorgeschoben werden, wobei die einzige Gruppe von Produkten in Streifen (G), die auf dem Aufnahme-/Lieferschieber (45) vorliegt, mindestens auf der hinteren vorstehenden Kante (50) ruht, um bewegt zu werden.

17. Verfahren nach Anspruch 16, **dadurch gekennzeichnet, dass** während des Übertragungsschritts die einzelnen Gruppen von Produkten in Streifen (G) im Wesentlichen immer auf der gleichen Gleitebene (33, 47) liegend bewegt werden, auf bestimmten der Bewegungsschieber (27) in der ersten (16, 17) und in einer möglichen zweiten (25; 16) Übertragungsstrecke positioniert sind und auf einer festen flachen Fläche, die sich zwischen der ersten (16, 17) und der möglichen zweiten (25; 16) Übertragungsstrecke befindet, gleiten, positioniert und Vorschub durch bestimmte der Aufnahme-/Lieferschieber (45).

## Revendications

1. Installation pour l'emballage de groupes uniformes de produits en bandes (G), comprenant au moins deux machines enveloppeuses (11, 12) dans laquelle chacun desdits produits en bandes (G) est enveloppé dans des moyens de protection respectifs, une machine de mise en boîte (13) située en aval desdites machines enveloppeuses (11, 12), dans laquelle les groupes définis numériquement desdits produits en bandes (G) enveloppés dans des moyens de protection, sont emballés dans des emballages individuels, au moins une machine enveloppeuse (11, 12) n'étant pas alignée avec la machine de mise en boîte (13), et une unité de transfert (15) apte à transférer les groupes de produits en bandes (G) enveloppés par lesdites deux machines enveloppeuses (11, 12) vers la machine de mise en boîte (13), ladite unité de transfert (15) comprenant au moins une ligne de transfert (16, 17 ; 25) associée à chaque machine enveloppeuse (11, 12), l'une desdites lignes de transfert (16, 17 ; 25) étant apte à alimenter la machine de mise en boîte (13), **caractérisée en ce que**
lesdites lignes de transfert (16, 17 ; 25) sont espacées et parallèles et aptes à déplacer, d'une façon organisée avec la cadence désirée, les groupes individuels de produits en bandes (G), tout en maintenant les composants individuels des groupes de produits dans les positions réciproques qu'ils auront à la fin de l'emballage, et au moins une ligne de transfert intermédiaire (19) disposée au moins entre deux des lignes de transfert (16, 17 ; 25), qui est apte à déplacer lesdits groupes individuels de produits (G) de façon continue et autonome au moins entre lesdites deux lignes de transfert (16, 17 ; 25), tout en maintenant lesdits groupes de produits en bandes (G) dans les positions et avec l'orientation qu'ils ont dans les dites lignes de transfert (16, 17 ; 25), dans laquelle chacune desdites lignes de transfert (16, 17 ; 25) comprend une pluralité de curseurs à mouvement individuel (27), et ladite ligne de transfert intermédiaire (19) comprend également une pluralité de curseurs de prélèvement / livraison (45), complémentaire avec lesdits curseurs de mouvement (27), lesdits curseurs de mouvement (27) et lesdits curseurs de prélèvement / livraison (45) étant aptes à contenir et déplacer au moins un groupe de produits en bandes (G), dans lequel lesdits curseurs de mouvement (27) et lesdits curseurs de prélèvement / livraison (45) sont conçus chacun pour déplacer le même groupe de produits en bandes (G), ledit groupe de produits en bandes (G) correspondant au groupe de produits (G) emballé dans un seul emballage par ladite machine de mise en boîte (13),
dans laquelle lesdits curseurs de mouvement (27) possèdent des parties en saillie (36) pour le positionnement de groupes de produits en bandes (G) et respectivement destinées à contenir, déplacer et pousser les dits groupes de produits en bandes (G) sur une surface continue autonome ;
dans laquelle un plan de glissement (47) est situé entre lesdites lignes de transfert (16, 17, 25), dans laquelle chaque curseur de prélèvement / livraison (45) est pourvu d'une surface continue (48) sur laquelle sont réalisées de rainures débouchantes (49) dans des positions permettant aux parties en saillie (36) des curseurs de mouvement (27) de les traverser, dans laquelle ladite surface (48) est pourvue d'au moins un bord en saillie arrière (50), s'étendant transversalement à la direction d'avance du curseur de prélèvement / livraison (45) et conçu pour pousser les produits en bandes (G) le long du plan de glissement (47), le groupe individuel de produits en bandes (G) présent sur ledit curseur de prélèvement / livraison (45) s'appuyant au moins sur ledit bord en saillie arrière (50) pour pouvoir être déplacé.

2. Installation selon la revendication 1, **caractérisée en ce que** chacune desdites lignes de transfert (16, 17 ; 25) comprend une courroie (29) enroulée entre une poulie d'entraînement et une poulie de retour, et à laquelle sont associés lesdits curseurs de mouvement (27), dans laquelle au moins un segment de la courroie (29) faisant face à une partie supérieure possède un plan d'appui (32) pour les curseurs de mouvement (27), deux parois latérales de confinement (39) étant situées sur les côtés opposés du plan d'appui (32), et étant conçues pour confiner les produits en bandes (G) sur les curseurs de mouvement respectifs (27) .

3. Installation selon importe laquelle des revendications précédentes, **caractérisée en ce que** lesdites lignes de transfert comprennent des premières lignes de transfert (16, 17) s'étendant de chaque machine enveloppeuse (11, 12), au moins une deuxième ligne de transfert (25, 16) étant située entre au moins l'une desdites premières lignes de transfert (16, 17) et la machine de mise en boîte (13).

4. Installation selon la revendication 3, **caractérisée en ce qu'**au moins l'une des dites premières lignes de transfert (16, 17) est reliée à la deuxième ligne de transfert (25, 16) par une ligne de transfert intermédiaire (19).

5. Installation selon importe laquelle des revendications précédentes, **caractérisée en ce que** lesdits curseurs de mouvement (27) sont pourvus d'un plan d'appui (33) sur lequel les groupes individuels de produits en bandes (G) sont agencés, ledit plan de glissement (47) étant relié sans solution de continuité audit plan d'appui (33).

6. Installation selon la revendication 5, **caractérisée en ce que** le plan d'appui (33) possède une largeur (L) inférieure à la longueur (B) des produits en bandes (G) de façon que, lorsque les produits en bandes (G) sont placés sur le curseur de mouvement (27), leurs extrémités respectives font saillie de celui-ci.

7. Installation selon la revendication 5 ou 6, **caractérisée en ce que** les parties en saillie (36) s'étendent du plan d'appui (33) et sont situés aux quatre coins du curseur de mouvement respectif (27), et sont conçues pour définir une longueur utilisable (W) du plan d'appui (33) qui est un multiple fini d'une largeur (R) de chaque produit en bande (G).

8. Installation selon n'importe laquelle des revendications 5 à 7, **caractérisée en ce que** ladite ligne de transfert intermédiaire (19) comprend une courroie (41) enroulée entre une poulie d'entraînement (42) et une poulie de retour (43) associées à une structure portante (46), et à laquelle sont associés lesdits curseurs de prélèvement / livraison (45), dans laquelle les curseurs de prélèvement / livraison (45) associés à un segment inférieur de la courroie (41) sont aptes à glisser sur un plan de glissement (47) s'étendant entre lesdites lignes de transfert (16, 17; 25).

9. Installation selon n'importe laquelle des revendications précédentes, **caractérisée en ce que** ladite ligne de transfert intermédiaire (19) comprend des moyens de guidage (51, 52), qui sont conçus pour maintenir lesdits curseurs de prélèvement / livraison (45) sensiblement parallèles audit plan de glissement (47), lesdits moyens de guidage (51, 52) comprenant deux premiers éléments de guidage opposés (51) s'étendant le long de côtés longitudinaux d'un curseur de prélèvement / livraison respectif (45), et aptes à coopérer avec la structure portante (46), lesdits moyens de guidage (51, 52) comprenant également des deuxièmes éléments de guidage (52) sur lesquels peuvent s'appuyer les premiers éléments de guidage (51).

10. Installation selon n'importe laquelle des revendications précédentes, **caractérisée en ce que** ladite ligne de transfert intermédiaire (19) comprend une plaque de pression (53), pressée par des moyens à ressort (55) contre un curseur de prélèvement / livraison respectifs (45).

11. Installation selon la revendication 1, **caractérisée en ce que** ladite ligne de transfert intermédiaire (19) comprend des parois latérales de confinement (56) aptes à confiner les produits en bandes (G) pendant qu'ils sont déplacés le long du plan de glissement (47).

12. Installation selon la revendication 1, **caractérisée en ce que** chacune desdites premières lignes de transfert (16, 17), de ladite deuxième ligne de transfert (25, 16) ainsi que ladite ligne de transfert intermédiaire (19), sont conçues pour déplacer lesdits groupes de produits en bandes (G) de façon qu'ils reposent toujours sur le même plan de glissement (33, 47) et maintiennent la même orientation et le même positionnement réciproques des produits individuels (G).

13. Installation selon n'importe laquelle des revendications précédentes, **caractérisée en ce qu'**au moins ladite deuxième ligne de transfert (25) comprend un premier et en second curseur de mouvement (27) aptes à déplacer respectivement un premier et un second groupe desdits produits en bandes (G) et à alimenter ladite machine de mise en boîte (13).

14. Installation selon la revendication 1, **caractérisée en ce qu'**un dispositif presseur (40) est associé auxdits curseurs de mouvement (27), afin de maintenir les groupes de produits en bandes (G) adhérents audit plan d'appui (33).

15. Installation selon n'importe laquelle des revendications précédentes, **caractérisée en ce qu'**un espace de maintien temporaire (23) est agencé entre au moins une machine enveloppeuse (11, 12) et au moins une ligne de transfert (16, 17), pour contenir de façon temporaire les groupes enveloppés individuels de produits en bande (G), et **en ce que** des dispositifs d'alimentation (21, 22) sont agencés pour transférer lesdits produits en bandes (G) individuels dudit espace de maintien temporaire (23) à ladite ligne de transfert (16, 17).

16. Procédé pour l'emballage de groupes définis de produits en bandes (G), au moyen d'une installation selon n'importe laquelle des revendications précédentes, comprenant une étape dans laquelle chacun des composants desdits groupes de produits en bandes (G) est enveloppé dans des moyens de protection respectifs dans au moins deux machines enveloppeuses (11, 12), une étape consistant à transférer lesdits groupes de produits en bandes (G) de ladite au moins une machine enveloppeuse (11, 12) vers une seule machine de mise en boîte (13), et une étape dans laquelle un groupe numériquement défini desdits produits en bandes (G) enveloppés pour constituer un groupe, est emballé dans un seul emballage par la machine de mise en boîte (13), pendant la dite étape de transfert au moins une ligne de transfert (16, 17 ; 25) associée à chaque machine enveloppeuse (11, 12) déplace les groupes individuels de produits en bandes (G) sortant de la machine enveloppeuses correspondante (11, 12), l'une desdites lignes de transfert (16, 17; 25) étant utilisée pour alimenter la machine de mise en boîte (13), **caractérisée en ce que** lesdites lignes de transfert (16, 17 ; 25) sont espacées et parallèles de manière à déplacer, d'une façon organisée avec la cadence désirée, les groupes individuels de produits en bandes (G), tout en tout en maintenant les composants individuels des groupes de produits dans les positions réciproques qu'ils auront à la fin de l'emballage, et au moins une ligne de transfert intermédiaire (19) disposée au moins entre deux des lignes de transfert (16, 17 ; 25), tout en maintenant les groupes de produits en bandes (G) toujours avec l'orientation et avec les composants dans les positions réciproques qu'ils ont lorsqu'ils sont alimentés par la ligne de transfert correspondante (16, 17), dans laquelle une pluralité de curseurs de mouvements individuels (27) compris dans chacune des lignes de transfert (16, 17 ; 25) et une pluralité de curseurs de prélèvement / livraison (45) compris dans ladite ligne de transfert intermédiaire (19), et complémentaire avec lesdits curseurs de mouvement (27), contient et déplace au moins un groupe de produits en bandes (G), dans lequel lesdits curseurs de mouvement (27) et lesdits curseurs de prélèvement / livraison (45) déplacent chacun le même groupe de produits en bandes (G), ledit groupe de produits en bandes (G) correspondant au groupe de produits (G) emballé dans un emballage par ladite machine de mise en boîte (13),
dans laquelle lesdits curseurs de mouvement (27) possèdent des parties en saillie (36) pour le positionnement de groupes de produits en bandes (G) et respectivement destinées à contenir, déplacer et pousser les dits groupes de produits en bandes (G) sur une surface continue autonome ;
dans laquelle un plan de glissement (47) est situé entre lesdites lignes de transfert (16, 17, 25), dans laquelle chaque curseur de prélèvement / livraison (45) est pourvu d'une surface continue (48) sur laquelle sont réalisées de rainures débouchantes (49) dans des positions permettant aux parties en saillie (36) des curseurs de mouvement (27) de les traverser, dans laquelle ladite surface (48) est pourvue d'au moins un bord en saillie arrière (50), s'étendant transversalement à la direction d'avance du curseur de prélèvement / livraison (45) et poussant les produits en bandes (G) le long du plan de glissement (47), le groupe individuel de produits en bandes (G) présent sur ledit curseur de prélèvement / livraison (45) s'appuyant au moins sur ledit bord en saillie arrière (50) pour pouvoir être déplacé.

17. Procédé selon la revendication 16, **caractérisé en ce que**, pendant ladite étape de transfert lesdits groupes individuels de produits en bandes (G) sont déplacés pendant qu'ils reposent sensiblement toujours sur le même plan de glissement (33, 47), positionnés sur lesdits curseurs de mouvement spécifiques (27) dans la première (16, 17) et une éventuelle deuxième (25; 16) ligne de transfert, et glissant sur une surface plane et fixe situé entre la première (16, 17) et éventuellement la deuxième (25; 16) ligne de transfert, positionnés et poussées par desdits curseurs de prélèvement / livraison (45) spécifiques.
